# EUROPÄISCHE PATENTSCHRIFT

(11) **EP 0 712 768 B1**
(45) Veröffentlichungstag und Bekanntmachung des Hinweises auf die Patenterteilung: **03.03.1999**
(21) Anmeldenummer: 95114014.4
(22) Anmeldetag: 07.09.1995
(51) Int. Cl.: B60R 25/04

(54) **Fremdnutzungsschutzeinrichtung für ein Kraftfahrzeug**
Device for protection against unauthorized use of a vehicle
Dispositif de protection contre l'utilisation non-autorisée d'un véhicule

(30) Priorität: 17.11.1994 DE 4440975
(43) Veröffentlichungstag der Anmeldung: 22.05.1996
(73) Patentinhaber: DAIMLER-BENZ AKTIENGESELLSCHAFT, 70567 Stuttgart (DE)
(72) Erfinder: Büdel, Ulrich, Dipl.-Ing., D-70771 Leinfelden-Echterdingen (DE)

(56) Entgegenhaltungen:
- EP-A- 0 417 944
- EP-A- 0 574 230
- DE-C- 4 240 458
- US-A- 4 159 467
- US-A- 4 805 722
- GRAMM, ROLF: "SATELLITENHILFE GEGEN AUTO-KLAU"; FUNKSCHAU 16/1993; DE; SEITEN 42FF.

## Beschreibung

Die Erfindung bezieht sich auf eine Fremdnutzungsschutzeinrichtung für ein Kraftfahrzeug,die eine fahrzeugseitig angeordnete Nutzungssteuerungseinrichtung beinhaltet, welche den Betriebszustand wenigstens eines fahrbetriebsnotwendigen Fahrzeugaggregates in Abhängigkeit von einer zugeführten, fahrzeugspezifischen Nutzungsberechtigungsinformation steuert.

Eine solche Einrichtung ist z.B. in der Patentschrift US-A-4 805 722 offenbart. Die dortige Nutzungssteuerungseinrichtung steuert unter anderem die Zündung sowie die Benzinzufuhr für ein Kraftfahrzeug mit Verbrennungsmotor. Diese Steuerung erfolgt in Abhängigkeit von einer eingangsseitig über einen Kartenleser zuführbaren Nutzungsberechtigungsinformation, die wenigstens eine Fahrzeugidentitätsinformation sowie eine Nutzungsdauerinformation umfaßt, die mittels des Kartenlesers von einer einführbaren Benutzerkarte ablesbar sind. Die Nutzungssteuerungseinrichtung vergleicht diese Informationen bei einem Fahrzeugstart mit einer in ihr gespeicherten Fahrzeugidentitätsinformation und der von einem eigenen Zeitgeber generierten Zeitinformation über das momentane Datum und die momentane Uhrzeit. Erkennt sie bei diesem Vergleich, daß die Fahrzeugidentitäten nicht übereinstimmen oder daß die auf der Karte gespeicherte Nutzungsdauer abgelaufen ist, sperrt sie den weiteren Fahrzeugbetrieb durch Unterbrechen der Benzinzufuhr und Deaktivierung der Zündung. Ein solches System auf der Basis einer Benutzerkarte birgt ebenso wie zugangsblockierende Systeme in Form von Schließanlagen mit mechanischem und/oder elektrischem Schlüssel die Gefahr, daß sich ein unberechtigter Fremdnutzer durch Bedrohung des Berechtigten in den Besitz des nutzungsberechtigenden Elementes, d.h. der Karte oder des Schlüssels, sowie der ggf. zur weiteren Nutzung erforderlichen Benutzercodeinformation bringt.

Um einer solchen Gefahr der Fahrerbedrohung zu begegnen, ist bereits vorgeschlagen worden, eine fahrzeugseitig angeordnete Wegfahrsperre erst nach einem Diebstahl über ein Funksignal, das z.B. durch die Herstellerfirma ausgelöst werden könnte, zu aktivieren, so daß sich wegen des zunächst erfolgreichen Diebstahlversuchs für den Unberechtigten kein Anlaß zur Bedrohung des Berechtigten ergibt. Allerdings bleibt dieser Fremdnutzungsschutz unwirksam, wenn es dem Unberechtigten erfolgreich gelingt, zwischenzeitlich Maßnahmen zur Abschirmung des zum Empfang des Funksignals der Wegfahrsperre vorgesehenen Empfängers im Fahrzeug vorzunehmen.

Weiter ist es bekannt, einen indirekten Fremdnutzungsschutz dadurch zu erreichen, daß das Fahrzeug mit einem Satelliten-Ortungssystem, z.B. einem sog. GPS-System, ausgerüstet wird, um auf diese Weise jederzeit geortet werden zu können, siehe z.B. den Beitrag "Satellitenhilfe gegen Auto-Klau" von R. Gramm in der Zeitschrift Funkschau 16/1993, Seite 42. Die Verwendung eines solchen Ortungssystems erfordert jedoch einen nicht unbeträchtlichen Aufwand und ist zudem vom Standpunkt des Datenschutzes her nicht unproblematisch.

Aus der Patentschrift DE 42 40 458 C1 ist eine weitere Einrichtung der eingangs genannten Art bekannt, bei der ein im Zündschlüssel des Kraftfahrzeuges integrierter Code-Sender periodisch Signale aussendet, wenn die Zündung eingeschaltet ist. Ein in einem elektronischen Gerät im Kraftfahrzeug integrierter Code-Empfänger empfängt diese Code-Signale bei eingeschalteter Zündung und wertet sie aus. Bei fehlendem oder fehlerhaftem Code-Signal gibt er Alarm. Dabei kann vorgesehen sein, daß der Code-Empfänger mit der Kraftfahrzeugelektronik verbunden ist und im Alarmfall funktionswesentliche Elemente des Kraftfahrzeuges gesperrt werden. Zudem wird dort vorgeschlagen, bei Bedarf mehrere, sich in einem Fahrzeug befindende elektronische Geräte mit je einem Code-Empfänger auszustatten und so auszulegen, daß funktionswesentliche Baugruppen des elektronischen Gerätes abgeschaltet werden, wenn kein Code-Signal im Code-Empfänder empfangen werden kann.

In der Offenlegungsschrift DE 42 39 271 A1 ist eine Diebstahlabsicherung mit Sende-Empfangs-Prinzip offenbart, bei der ein zu überwachender Gegenstand, insbesondere ein Fahrzeug, einen Empfänger mit einer individuellen Adresse erhält und bei Empfang seiner Adresse, die über einen außerhalb des Gegenstands angeordneten Sender gesendet wird, ein im Gegenstand befindlicher Sender aktiviert wird, der daraufhin Signale aussendet, die mit mindestens einem weiteren, außerhalb des Gegenstands angeordneten Empfänger empfangen und ausgewertet werden. Der Sender außerhalb des zu überwachenden Gegenstands kann beispielsweise ein Rundfunksender sein. Die außerhalb des Gegenstandes vorgesehenen Empfänger befinden sich im Fall der Überwachung eines Kraftfahrzeuges über die Landschaft verteilt an Autobahnauffahrten, Tankstellen, Ortseingängen usw. Das von dem im Gegenstand befindlichen Sender ausgesandte Signal wird von den außerhalb des Gegenstandes befindlichen Empfängern daraufhin ausgewertet, wo sich dieser Sender und damit der zu überwachende Gegenstand befindet, um den zu überwachenden Gegenstand jederzeit lokalisieren zu können.

Ein ebenfalls auf dem Sende-Empfangs-Prinzip beruhendes Zustandsüberwachungssystem ist in der Offenlegungsschrift EP 0 574 230 A1 beschrieben. Bei diesem System werden von einer Basisstation in periodischen Zeitabständen codierte Abfragesignale für Schutzeinheiten einer Anzahl von mobilen oder transportablen Schutzobjekten, wie Fahrzeugen oder Unterhaltungselektronikgeräten, oder immobilen Schutzobjekten, wie Gebäuden, abgegeben, die daraufhin im fehlerfreien Fall drahtlose Kommunikationssignale senden, die u.a. eine Information über den Zustand des Objektes enthalten können. Ein Ausbleiben einer derartigen Anwort von einer jeweiligen Schutzeinheit wird von der Basisstation als Alarmzustand gewertet, woraufhin diese vorgebbare Maßnahmen einleitet. Bei Bedarf können mehrere Basisstationen in einem Netzwerk vorgesehen sein, die sich für jedes Schutzobjekt spezifische Informationen teilen. Die Schutzeinheit kann z.B. im Fall eines Automobils als zugehörigem Schutzobjekt in einen elektronischen Schaltkreis desselben derart eingeschleift sein, daß dieser seine normale Funktionsweise abbricht, wenn die Schutzeinheit keine Abfragesignale mehr von einer zugehörigen Basisstation empfängt.

Aus der Offenlegungsschrift EP 0 417 944 A2 sind ein Verfahren und eine Einrichtung zur Einbrucherkennung bei Fahrzeugen beschrieben, die mit Funktelefonen eines digitalen PLMN-Netzwerkes ausgerüstet sind. Bei diesem Verfahren verursacht ein Auslösesignal, das insbesondere von einem fahrzeugseitigen Einbrucherkennungssensor erfaßt werden kann, das Senden einer Kurznachricht mit Zeit- und Identifikationsdaten durch das Telefon. Die Kurznachricht wird zu einem empfangenden Kurznachricht-Endgerät übertragen, um den Einbruchsversuch anzuzeigen. Dem anfänglichen Auslösesignal können bei Bedarf weitere Auslösesignale in periodischen Zeitabständen folgen, um eine Spurverfolgung des Fahrzeugs zu ermöglichen.

Eine Fremdnutzungsschutzeinrichtung nach dem Oberbegriff des Anspruchs 1 ist aus der Patentschrift US 4.159.467 bekannt. Bei der dortigen Einrichtung wird die Nutzungsberechtigungsinformation von einem jeweiligen mobilen elektronischen Schlüssel mittels einer Nahübertragungsstrecke mit einer Reichweite von höchstens einigen wenigen Metern abgestrahlt, wobei beabsichtigt ist, daß auf diese Weise eine individuelle Kontrolle der Fahrzeugnutzungsberechtigung realisiert wird, die weitgehend analog zur Verwendung mechanischer Schlüssel ist.

Der Erfindung liegt als technisches Problem die Bereitstellung einer Fremdnutzungsschutzeinrichtung zugrunde, welche einen hohen Diebstahlschutz bietet, komfortabel und funktionssicher ist, den berechtigten Fahrzeugbenutzer nicht gefährdet und außerdem nicht durch Anschirmungsmaßnahmen gegenüber zum Fahrzeug gesendeter Signale außer Funktion gesetzt werden kann.

Dieses Problem wird durch eine Fremdnutzungsschutzeinrichtung mit den Merkmalen des Patentanspruchs 1 gelöst. Bei dieser Einrichtung ist vorgesehen, Nutzungssignale periodisch aufeinanderfolgend von einer fahrzeugexternen Stelle über eine Übertragungsstrecke auf der Basis elektromagnetischer Wellen auszusenden und eines oder mehrere fahrbetriebsnotwendige Fahrzeugaggregate durch die Nutzungssteuerungseinrichtung jeweils auf ein von letzterer empfangenes Nutzungssignal hin nur für eine vorgegebene Zeitdauer größer als der Zeitabstand zweier aufeinanderfolgender Nutzungssignale betriebsbereit zu halten, während ihr weiterer Betrieb und damit derjenige des Kraftfahrzeuges insgesamt gesperrt wird, sobald während dieser vorgegebenen Zeitdauer kein weiteres Nutzungssignal empfangen wird. Anstelle der Übertragung von nutzungsverhindernden Funksignalen, wie im Fall der bekannten, funksignalaktivierten Wegfahrsperre, werden hier umgekehrt nutzungsberechtigende Signale empfangen. Damit ist die Einrichtung automatisch vor Abschirmmaßnahmen gegenüber den zum Fahrzeug gesendeten Signalen durch einen Unberechtigten gesichert, da es hier im Interesse des jeweiligen Fahrzeugnutzers liegt, daß das Signal möglichst störungsfrei empfangen wird.

Bei einem Diebstahl meldet der Berechtigte denselben bei der für die Ausstrahlung der Nutzungssignale autorisierten Stelle, die daraufhin das weitere Aussenden von Nutzungssignalen einstellt, wonach die Nutzungssteuerungseinrichtung den weiteren Fahrzeugbetrieb blockiert. Dies kann entweder unmittelbar nach dem Ausbleiben eines Nutzungssignales oder nach Ablauf eines weiteren Zeitintervalls geschehen, wobei letzteres ggf. aus Funktionssicherheits-und/oder Verfügbarkeitserwägungen vorteilhaft sein kann. Eine solche autorisierte Stelle kann z.B. durch eine staatliche Stelle wie die Polizei oder durch den Fahrzeughersteller gebildet sein. Da die Nutzungsberechtigungsinformation fahrzeugextern über eine oder mehrere Sendeeinheiten mittels elektromagnetischer Wellen abgestrahlt wird, läßt sich ohne Zusatzaufwand durch geeignete Wahl des erreichbaren Sendegebietes das Nutzungsgebiet für das jeweilige Fahrzeug in gewünschter Weise vorgeben, insbesondere auf einen bestimmten Raum, wie z.B. Deutschland oder Europa, beschränken. Da der Berechtigte keinen direkten Einfluß auf die Abstrahlung der Nutzungssignale hat, entfällt die Gefahr einer Bedrohung desselben durch einen Unberechtigten. Diese Bedrohungsgefahr für den Fahrzeugbesitzer ist zudem dadurch minimiert, daß das Fahrzeug außer vom Besitzer ggf. auch von einer anderen Person als entwendet gemeldet und anschließend von der autorisierten Stelle stillgesetzt werden kann. Die Einrichtung kann zudem Schutz vor einem betrügerisch initiierten Diebstahl durch den Berechtigten selbst bieten, indem die Versicherung, wenn der Berechtigte sein Fahrzeug bei ihr als gestohlen meldet, bei der autorisierten Stelle das Aussetzen der Abstrahlung weiterer Nutzungssignale für dieses Fahrzeug anfordert. Das als gestohlen gemeldete Fahrzeug kann folglich nicht mehr benutzt und damit vom gegenwärtigen Besitzer auch nicht mehr zur weiteren aktiven Benutzung veräußert werden.

In Ausgestaltung der Erfindung werden gemäß Anspruch 2 die Nutzungssignale über ein digitales Funknetz übertragen. Hierzu können bereits bestehende Funknetze verwendet werden, so daß die Einrichtung einer separaten Übertragungsstrecke nicht erforderlich ist. In weiterer Ausgestaltung dieser Maßnahme bildet gemäß Anspruch 3 ein Autotelefon den Empfangsteil der Nutzungssteuerungseinrichtung, wobei das Autotelefon parallel seine übliche Funktion zusätzlich erfüllt. Damit entfällt die Notwendigkeit eines separaten Empfangsteils für die Fremdnutzungsschutzeinrichtung für Fahrzeuge, die bereits mit Autotelefon ausgerüstet sind.

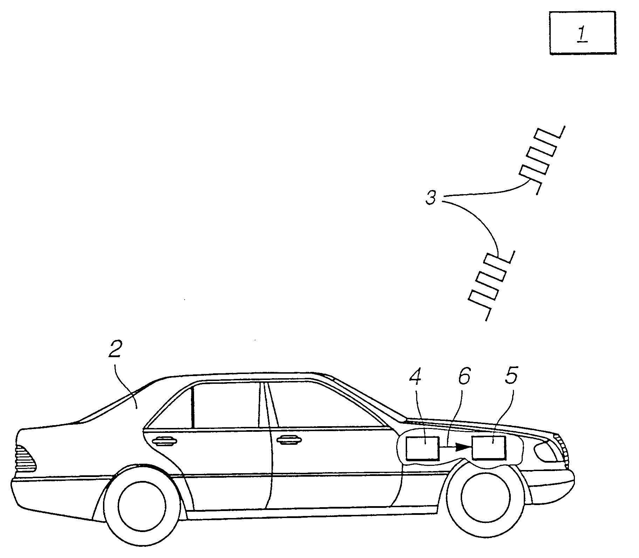

Eine bevorzugte Ausführungsform der Erfindung ist in der Zeichnung dargestellt und wird nachfolgend beschrieben.

Die einzige Figur zeigt schematisch eine Fremdnutzungsschutzeinrichtung mit Nutzungssignalübertragung in einem Blockdiagramm.

In der Figur ist schematisch eine Sendeanlage (1) dargestellt, die für hierzu registrierte Fahrzeuge, von denen eines (2) schematisch gezeigt ist, fahrzeugspezifische Nutzungsberechtigungsinformationen über ein digitales Funknetz (3) in einem vorgegebenen Fahrzeugnutzungsgebiet abstrahlt, wobei die Sendeanlage (1) mehrere räumlich getrennte Sender umfaßt. Die abgestrahlte Nutzungsberechtigungsinformation enthält Nutzungssignale in Form einer jeweiligen Signalimpulsgruppe von fahrzeugspezifischer Gestalt, wobei die Nutzungssignale in vorgegebenen Zeitabständen periodisch aufeinanderfolgend abgestrahlt werden. Die Sendeanlage (1) kann außer als terrestrische Sendeanlage auch als Satellitensendeanlage realisiert sein.

Fahrzeugseitig beinhaltet die Fremdnutzungsschutzeinrichtung eine Nutzungssteuerungseinrichtung (4) und eine Vielzahl von fahrbetriebsnotwendigen Fahrzeugaggregaten, von denen eines (5) stellvertretend dargestellt ist. Diese Fahrzeugaggregate (5) können beispielsweise durch die verschiedenen, in der Elektrik des Fahrzeugs (2) vorhandenen Steuergeräte realisiert sein, wie z.B. ein vorhandenes Motorsteuergerät. Jedes dieser in die Fremdnutzungsschutzeinrichtung einbezogenen, fahrbetriebsnotwendigen Fahrzeugaggregate (5) ist durch die Nutzungssteuerungseinrichtung (4) über eine zugehörige, manipulationsgeschützte Steuerleitung (6) in ihrem Betriebszustand zwischen freigegebenem Betrieb und gesperrtem Betrieb umschaltbar. Bei Fahrzeugen, die über einen Steuergerätedatenbus verfügen, kann die Signalleitung (6) bevorzugt als Teil dieses Bussystems realisiert sein. Gegebenenfalls kann unter Wegfall einer extern verbindenden Steuerleitung (6) die Nutzungssteuerungseinrichtung (4) in jedes der einbezogenen Fahrzeugaggregate (5) als ein jeweiliger Teil hiervon integriert sein, um die Manipulationssicherheit weiter zu erhöhen. Solche Details der fahrzeugseitigen Realisierung einer solchen zentralen oder dezentralen Wegfahrsperrfunktion von Fahrzeugaggregaten sind Stand der Technik und bedürfen daher vorliegend keiner eingehenden Beschreibung. Insbesondere ist bei der Realisierung dieses fahrzeugseitigen Funktionsteils der Wegfahrsperre darauf zu achten, daß er nicht durch einfaches Auswechseln einzelner Teile oder Fahrzeugkomponenten umgangen werden kann.

Die Nutzungssteuerungseinrichtung (4) umfaßt des weiteren ein Empfängerteil, das durch ein im Fahrzeug (2) vorhandenes Autotelefon als in die Nutzungssteuerungseinrichtung (4) einbezogene Einheit gebildet wird. Selbstverständlich kann für Fahrzeuge ohne Autotelefon ein separates Empfängerteil für die Fremdnutzungsschutzeinrichtung vorgesehen werden. Immer bei Empfang eines neuerlichen Nutzungssignals und Erkennung desselben als zum betreffenden Fahrzeug (2) gehörig, wozu die Nutzungssteuerungseinrichtung (4) die Fahrzeugidentitätsinformation des empfangenen Nutzungssignals mit einer in ihr gespeicherten Fahrzeugidentitätsinformation vergleicht, hält die Nutzungssteuerungseinrichtung (4) die fahrbetriebsnotwendigen Fahrzeugaggregate (5) jeweils für eine vorgegebene anschließende Zeitdauer in aktivem Betrieb, wobei diese vorgegebene Zeitdauer größer als der Zeitabstand zweier aufeinanderfolgend gesendeter Nutzungssignale ist. Je nach gewünschter Übertragungssicherheit kann diese freigegebene Aggregatbetriebsdauer ein Vielfaches dieses Nutzungssignalzeitabstandes betragen. Wird innerhalb dieser freigegebenen Aggregatbetriebsdauer kein weiteres Nutzungssignal mehr empfangen, so werden die betroffenen Fahrzeugaggregate (5) von der Nutzungssteuerungseinrichtung (4) noch über ein vorgegebenes Zeitintervall hinweg betriebsbereit gehalten, damit sich keine sicherheitskritischen Fahrzustände oder Verfügbarkeitsprobleme ergeben. Nach Ablauf dieses Zeitintervalls werden dann die betroffenen Fahrzeugaggregate (5) von der Nutzungssteuerungseinrichtung (4) nach dem nächsten Stehen des Fahrzeugs (2), z.B. dem nächsten Abschalten der Zündung, in ihren betriebsblockierten Zustand gesteuert, so daß das Fahrzeug nicht mehr in Fahrbereitschaft gesetzt werden kann.

Ein solches Ausbleiben der den Fahrzeugbetrieb aufrechterhaltenden Nutzungssignale kann bei der für die Abstrahlung der Nutzungsberechtigungsinformation autorisierten Stelle, z.B. der Polizei, veranlaßt werden, z.B. vom Berechtigten oder dessen Versicherung, nachdem das Fahrzeug als gestohlen gemeldet wurde. Weiterhin kann das Ausbleiben von Nutzungssignalen darauf zurückzuführen sein, daß sich das Fahrzeug aus dem durch die Reichweite der Sendeanlage (1) festgelegten Nutzungsgebiet entfernt hat. Durch Festlegen gewünschter Nutzungsgebiete läßt sich folglich das Entwenden und Verschieben von Fahrzeugen in andere Länder und/oder Kontinente wirksam unterbinden. Am Instrumentenbrett ist eine entsprechende Warnanzeige, z.B. als Kontrollampe oder alphanumerische Anzeige, vorgesehen, um den Fahrzeugbesitzer vom Ausbleiben der Nutzungssignale zu informieren und ihm innerhalb des eingeräumten Zeitintervalls die Möglichkeit zu geben, eine Werkstatt aufzusuchen. Dort kann festgestellt werden, ob es sich um eine Funktionsstörung der Fremdnutzungsschutzeinrichtung handelt. Bei Bedarf kann zudem die Möglichkeit einer Notinbetriebnahme, z.B. einmalig nach Auslösen der Wegfahrsperrfunktion oder für eine vorgegebene Zeitdauer danach, vorgesehen werden.

Die Übertragung der Nutzungssignale über das Funknetz (3) ist bereits dadurch weitestgehend manipulationssicher, daß es weder dem Berechtigten noch vor allem einem Unberechtigten möglich sein dürfte, aus der Vielzahl abgestrahlter Nutzungssignale für die verschiedenen Fahrzeuge das für das betreffende Fahrzeug vorgesehene zu erkennen, um es anderweitig zu generieren und damit das System umgehen zu können. Falls gewünscht, kann zusätzlich eine codegeschützte Nutzungssignalübertragung eingerichtet werden, wie sie z.B. für die Nutzungscodeübertragung in Zugangsberechtigungssystemen mit elektronischer Schlüsselcodierung üblich ist und daher hier nicht näher beschrieben zu werden braucht.

Die obige Beschreibung eines bevorzugten Ausführungsbeispiels macht die zuvor erwähnten Vorteile der erfindungsgemäßen Fremdnutzungsschutzeinrichtung deutlich. Es versteht sich, daß sich die Einrichtung sowohl für einen Fuhrpark mit einer begrenzten Anzahl von Fahrzeugen, z.B. eines Speditions-, eines Mietwagen- oder eines Taxiunternehmens, als auch grundsätzlich für alle Fahrzeuge eines betreffenden Gebietes eignet, wobei in letzterem Fall z.B. jeweils nach Zulassung eines Fahrzeugs eine Anforderung zur Abstrahlung der für das Fahrzeug vorgesehenen Nutzungssignale von der Zulassungsstelle zur für die Signalabstrahlung autorisierten Stelle ergehen kann. Das Abstrahlen des jeweiligen Nutzungssignals wird dann von der autorisierten Stelle beendet, wenn sie hierzu von einer berechtigten Person aufgefordert wird, z.B. vom berechtigten Fahrzeugnutzer, dessen Versicherung oder von der Zulassungsstelle nach Abmelden des Fahrzeugs. Außerdem kann die Einrichtung für eine Mietfahrzeugflotte dergestalt verwendet werden, daß die Nutzungssignalabstrahlung von vornherein auf die jeweilige Mietdauer beschränkt wird, wodurch verhindert wird, daß angemietete Fahrzeuge über die Mietdauer hinaus unberechtigterweise weiterbenutzt werden.

Die erfindungsgemäße Einrichtung stellt damit ein sehr zuverlässiges, manipulationssicheres und komfortables System zum Schutz von Fahrzeugen gegen unberechtigte Fremdnutzung dar, wobei nicht das direkte Entwenden verhindert, sondern selbiges dadurch uninteressant gemacht wird, daß das Fahrzeug jederzeit von zentraler Stelle immobilisiert werden kann. Der Aufwand für ggf. zusätzlich vorgesehene Zugangskontrollen, Schließsysteme oder herkömmliche Wegfahrsperren kann damit entfallen oder jedenfalls geringer ausfallen.

## Patentansprüche

1. Fremdnutzungsschutzeinrichtung für ein Kraftfahrzeug, mit
- einer fahrzeugseitig angeordneten Nutzungssteuerungseinrichtung (4), die den Betrieb wenigstens eines fahrbetriebsnotwendigen Fahrzeugaggregates (5) in Anhängigkeit von einer zugeführten Nutzungsberechtigungsinformation freigibt oder sperrt, wobei
- die Nutzungsberechtigungsinformation in vorgegebenen Zeitabständen periodisch aufeinanderfolgende, fahrzeugspezifische Nutzungssignale beinhaltet und
- die Nutzungssteuerungseinrichtung (4) den Betrieb des wenigstens einen fahrbetriebsnotwendigen Fahrzeugaggretes (5) jeweils nach Empfang eines Nutzungssignals für eine vorgegebene Zeitdauer, die größer als der Zeitabstand zweier aufeinanderfolgender Nutzungssignale ist, freigibt sowie dessen Betrieb sperrt, wenn sie während der vorgegebenen Zeitdauer kein weiteres Nutzungssignal empfängt,
**dadurch gekennzeichnet, daß**
- die Nutzungsberechtigungsinformation von einer oder mehreren fahrzeugexternen, terrestrischen oder Satelliten-Sendeanlagen (1) mittels einer zugehörigen Übertragungsstrecke (3) auf Basis elektromagnetischer Wellen abgestrahlt wird.

2. Fremdnutzungsschutzeinrichtung nach Anspruch 1, weiter
**dadurch gekennzeichnet, daß**
die Nutzungsberechtigungsinformation über ein digitales Funknetz (3) übertragen wird.

3. Fremdnutzungsschutzeinrichtung nach Anspruch 2, weiter
**dadurch gekennzeichnet, daß**
die Nutzungssteuerungseinrichtung (4) ein Autotelefon zum Empfang der Nutzungsberechtigungsinformation umfaßt.

## Claims

1. Device for the protection of a motor vehicle from unauthorized use, with
- a utilization control device (4) in the vehicle, which releases or blocks the operation of at least one vehicle aggregate (5) necessary for driving, as a function of the input of utilization-authorizing information, such that
- the utilization-authorizing information contains periodic, successive, vehicle-specific authorizing signals, and
- the utilization control device (4) permits the operation of the at least one vehicle aggregate (5) necessary for driving, in each case after receiving a utilization - authorizing signal, for a predetermined time which is longer than the time interval between successive utilization-authorizing signals, and blocks its operation if it does not receive another utilization-authorizing signal during the said predetermined time period,
**characterized in that**
the utilization-authorizing information is broadcast by one or more terrestrial or satellite transmitters (1) external to the vehicle, via an associated transmission channel (3) based on electromagnetic waves.

2. Device for protection against unauthorized use according to Claim 1, further
**characterized in that**
the utilization-authorizing information is transmitted via a digital radio network (3).

3. Device for protection against unauthorized use according to Claim 2, further
**characterized in that**
the utilization control device (4) comprises a car telephone to receive the utilization-authorizing information.

## Revendications

1. Dispositif de protection contre l'utilisation illicite d'un véhicule, comprenant
• un dispositif de gestion de l'utilisation (4), qui est monté dans le véhicule et qui, en fonction de la transmission d'une information d'acquittement, valide ou refuse la mise en service d'au moins un module pour véhicule (5), nécessaire pour la mise en service du véhicule, dans lequel dispositif de protection
• l'information d'acquittement contient des signaux d'utilisation, spécifiques au véhicule, qui se succèdent à intervalles périodiques prédéterminés, et
• le dispositif de gestion de l'utilisation (4) valide la mise en service du au moins un module pour véhicule (5), nécessaire pour la mise en service du véhicule, après réception d'un signal d'utilisation pour une durée prédéterminée, qui est supérieure à l'intervalle de temps entre deux signaux d'utilisation consécutifs, ou refuse la mise en service dudit module si pendant la durée prédéterminée ledit dispositif de gestion n'a capté aucun autre signal d'utilisation,
caractérisé en ce que
• l'information d'acquittement est émise par un ou plusieurs émetteurs (1) terrestres ou satellites, externes au véhicule, par l'intermédiaire d'une voie de transmission correspondante basée sur des ondes électromagnétiques.

2. Dispositif de protection contre l'utilisation illicite selon la revendication 1, caractérisé, en outre, en ce que l'information d'acquittement est transmise par un réseau radio (3) numérique.

3. Dispositif de protection contre l'utilisation cite selon la revendication 2, caractérisé, en outre, en ce que le dispositif de gestion de l'utilisation (4) comprend un radiotéléphone de voiture, destiné à recevoir l'information d'acquittement.
